# EUROPEAN PATENT APPLICATION

(11) **EP 2 213 355 A1**
(43) Date of publication of application: **04.08.2010**
(21) Application number: 09150165.0
(22) Date of filing: 07.01.2009
(51) Int. Cl.: B01D 29/64, B01D 29/90

(54) **Fast-flow self-cleaning filter**

(71) Applicant: S.A.T.I. S.P.A., 47023 San Carlo di Cesena (FO) (IT)
(72) Inventor: Vernocchi, Valerio, 47023, Borello di Cesena (IT)
(74) Representative: Ripamonti, Enrico

(57) **Abstract**

A filter module (100) for fluids comprising a pre-filtering chamber (4) apt to receive the fluid to be filtered, a filter element (3) at least partly limiting said pre-filtering chamber (4), a feeding chamber (8) arranged upstream the pre-filtering chamber (4), an access door (5) connecting the feeding chamber (8) to the pre-filtering chamber (4), at least one nozzle (9) apt to connect the feeding chamber (8) to the pre-filtering chamber (4) and a first mobile shutter (10) apt to close the access door (5), causing the fluid passage from the feeding chamber (8) to the pre-filtering chamber (4) through said at least one nozzle (9).

## Description

The present invention relates to a filter module according to the preamble of the main claim.

Many types of filter modules are known to the state of the art, able to separate from a liquid the impurities existing therein, by making it to pass through a filter element, usually a membrane or a net, apt to keep impurities. During the operation of a filter module such impurities deposit onto the filter element by gradually obstructing the passage of the liquid to be filtered. For this reason, it is necessary providing for the periodical regeneration of the filter module, for example by washing the filter element. The regeneration involves the interruption of the usual filter action, with great discomfort by users.

In order to make the washing operation less frequent, in US 4,966,701 and in US 5,076,942 a method and a filter device are described wherein the liquid to be filtered is accelerated when it contacts a filter element 12 by means of an accelerating device 14 which produces a reduction in the volume inside the filter. The high speed of the liquid moving in the narrow air space between said volume-reducing device and the filter element 12 hampers the deposition of the impurities to be filtered onto the filter element, by reducing the usual rate of getting dirty of the filter element and allowing in this way a lower frequency of the regeneration and cleaning operations with the consequent service interruption. In the mentioned documents it can further be noted that the impurities to be filtered, which do not succeed in crossing the filter element 12, are deposited downwards and discharged through a discharge valve 30, whereas the filtered liquid comes out through the outlet 18 placed approximately at half height of the filter module.

Although in this type of filter module the filter module gets less dirty, also in this case it is necessary to perform periodically a manual regeneration of the filter element. To this purpose an upstream valve interrupts the flow of the fluid to be filtered and the filter module is opened and cleaned. Once re-connected to the line, the upstream valve is opened again and the fluid is free to flow again through the filter module.

Alternatively, there are devices allowing an automatic washing of the filter element. Said devices can include a plurality of fixed nozzles apt to deliver a cleansing jet and an upstream valve which interrupts the flow inside the filter module, thus allowing to empty and clean it. Alternatively, there are suction devices sucking dirt from the surface of the filter module, by sweeping all the surface thereof thanks to a rotating or roto-translational motion.

A problem is that the cleaning operation results to be particularly complicated, thus requesting a manual intervention.

Another problem is that the cleaning of the filter element, in particular if implemented by means of an automatic device, involves a much more complicated plant wherein the filter module is to be inserted as a valve upstream the filter module and/or a separate circuit for feeding the nozzles could be necessary.

An additional problem is that the filter element, for example a membrane or a net, can be very delicate and break easily, due to the fact that the accelerated fluid hits directly the filter element. This involves the needs for a replacement thereof and the service interruption with huge costs.

The object of the present invention is thus to implement a device allowing to overcome the mentioned drawbacks, in particular an object is to implement a filter module which gets dirty very little allowing an easier cleaning of the filter element.

Another object is to implement a filter module with automatic washing requesting a simpler plant, for example not requesting an upstream valve for interrupting the flow of the fluid to be filtered during the regeneration.

An additional object is to prolong the life of the filter element.

Yet another object is to improve the efficiency in separating the impurities of the fluid to be filtered.

Said objects are achieved by a device the features thereof are highlighted by the claims.

The invention will be better understood by the following detailed description, provided by way of example only, then not for limitative purposes, of an embodiment example illustrated in the enclosed drawings wherein:

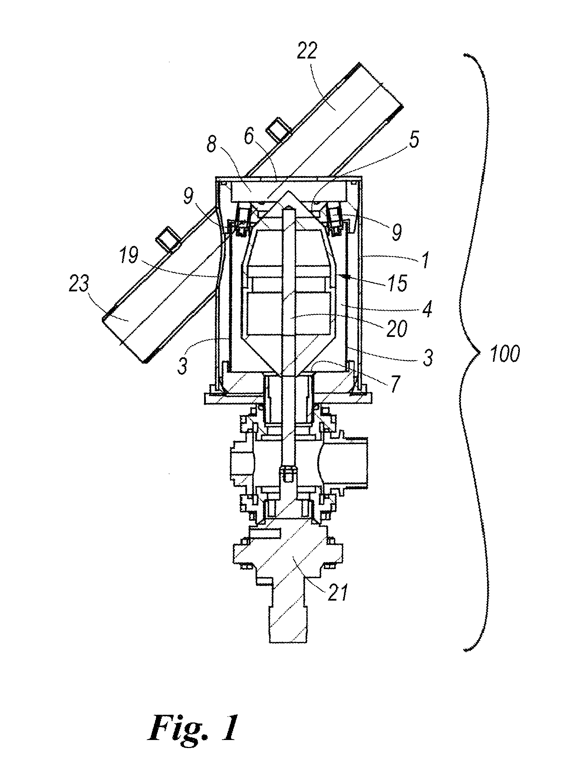

figure 1 shows a view in longitudinal section of the filter module according to the invention;
figure 2 shows a view in longitudinal section of the filter module with the mobile element in fluxing position;
figure 3 shows a view in longitudinal section of the filter module with the mobile element in washing position;
figure 4 shows a view in longitudinal section of the filter module with the mobile element in inhibited fluxing position, also called dead-end filtering;
figure 5 represents a detail of a different embodiment wherein the filter element has a back position with respect to the accelerator.

By referring to the drawings, it can be seen that in the preferred embodiment the filter module 100 according to the invention includes an outer housing 1 having a substantially cylindrical shape with circular directrix, with an inlet opening 6 at the upper base and an outlet opening 19 at the upper portion of the side surface. The filter module 100 also includes an inlet tract 22 leading to the access door 5 and an outlet tract 23 extending from the outlet opening 19. The inlet tract 22 and outlet tract 23 are arranged onto the same axis and they are implemented so as to allow an easy insertion of the filter module onto a line wherein the fluid depuration is to be implemented. Inside the housing 1 the filter module includes a feeding chamber 8 thereto the fluid accesses through the inlet opening 6, a pre-filtering chamber 4 having a substantially cylindrical shape with circular directrix with an upstream base 17 and a downstream base 18. Upon the upstream base 17 separating thereof from the feeding chamber 8, an access door 5 is arranged allowing the fluid to pass from the feeding chamber 8 to the pre-filtering chamber 4. A filter element 3 is arranged so as to implement the side surface of the pre-filtering chamber 4. The filter element 3 generally is a filtering net or a filtering membrane apt to keep the impurities existing in the fluid to be treated, generally a liquid, in particular water to be depurated. The outlet opening 19 is preferably arranged proximate to the inlet opening 6, so that the filtered fluid, after having passed through the filter element 3, has to go back upwards by inverting the motion thereof.

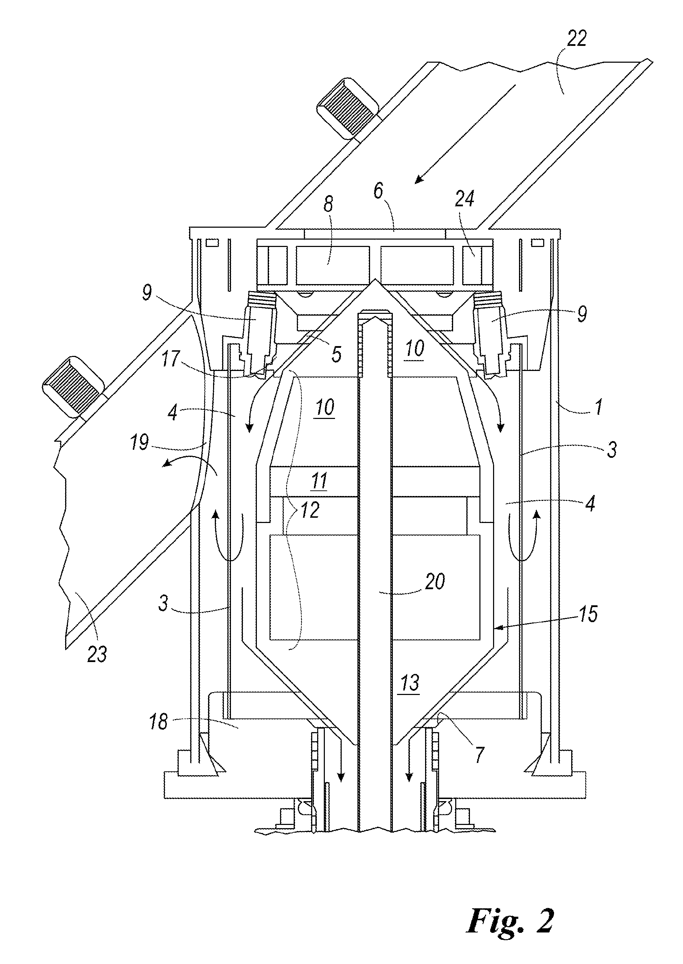

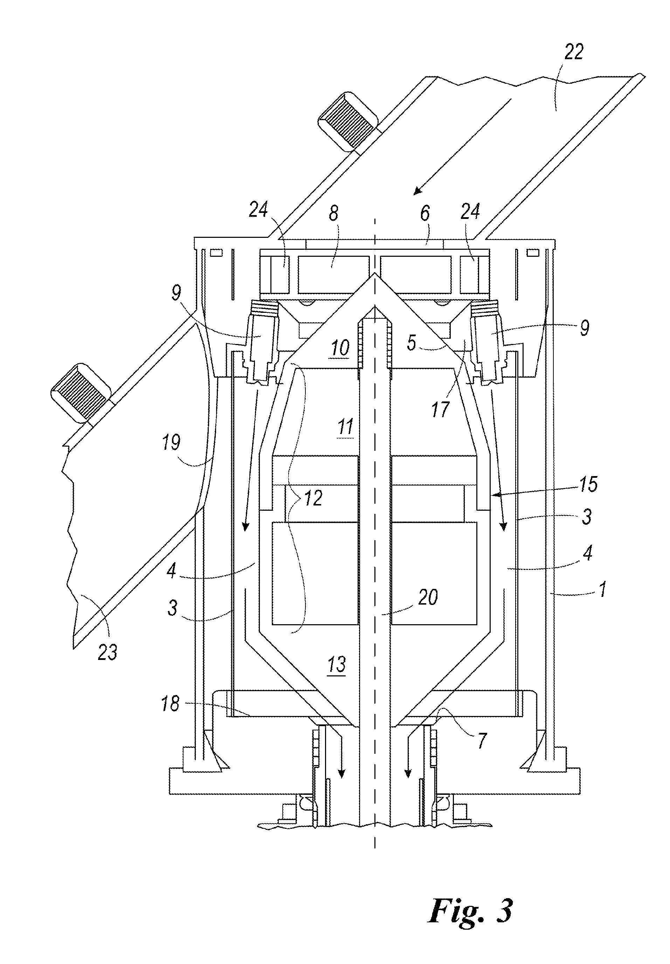

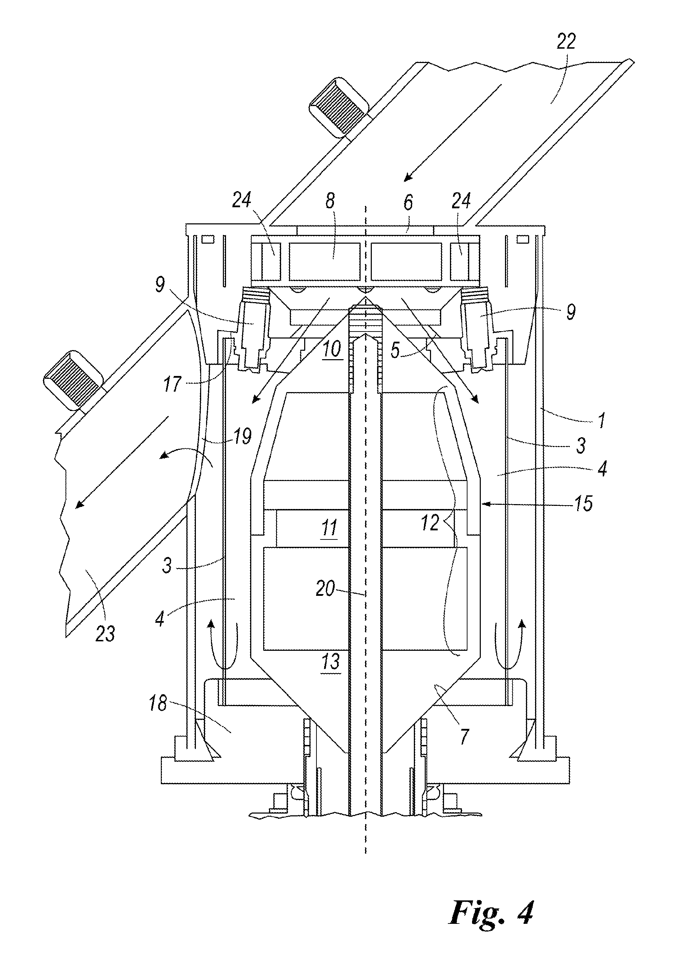

Of course, the filter module 100 can be opened for replacing the filter element 3. The downstream base 18 of the pre-filtering chamber 4 has an outflow door 7 for the discharge of the not filtered fluid. Upon the upstream base 17 of the pre-filtering chamber 4, between the pre-filtering chamber 4 and the feeding chamber 8, around the access door 5, a plurality of nozzles 9 is arranged for cleaning the filter element 3. Such nozzles 9 connect the feeding chamber 8 to the pre-filtering chamber 4 and they are oriented in the direction of the filter element 3, so that the fluid which from the feeding chamber 8 passes through the nozzles 9 in the pre-filtering chamber 4, hits the filter element 3 with a small incidence angle α to better remove dirt. The nozzles 9, arranged at the base edges of the feeding chamber 8 are protected by a protective filter 24 which aims at preventing that dirt can go inside the thin orifices of the nozzles 9 by clogging them. Such protective filter 24 keeps clean for the liquid flow which during the fluxing or dead end filtering phase flows at high speed on the surface thereof without substantially crossing it. A mobile element 15 is arranged onto the axis of the pre-filtering chamber 4, including at one end a first shutter 10, apt to close the access door 5, a central section called accelerator 11, having an active surface 12 mostly facing the filter element 3, a second shutter 13 arranged onto the other end and apt to close the outflow door 7. The mobile element 15 has an axialsymmetrical shape, it is fitted onto an axis 20 and it is mobile in the direction of the axis 20 thanks to an actuator 21. The mobile element can flow in the axial direction by assuming any intermediate position between a first position wherein it closes completely the access door 5 and a second position wherein it closes completely the outflow door 7. Most part of the active surface 12 has a cylindrical shape with circular directrix, parallel to the filter element 3. The active surface 12 is used to reduce the passage section with respect to the section of the inlet opening 6 and to increase the speed of the fluid to be filtered skimming over the filter element 3. A greater fluid speed at the filter element 3 allows it to get less dirty. The first shutter 10 and the second shutter 13 have a substantially conical shape connecting to the active surface 12 of the accelerator 11 with a substantially cylindrical shape. Such connection is more gradual for the first shutter 10 and it takes place with a portion of the active surface 12 with truncated conical shape. As the mobile element is arranged onto the axis of the pre-filtering chamber 4, the access door 5 is arranged in central position onto the upstream base 17 and the outflow door 7 is arranged in central position onto the downstream base 18. Moving in the axial direction, the mobile element can alternatively close the access door 5 (figure 3) or the outflow door 7 (figure 4). The mobile element 5 can also be arranged in an intermediate position, thus leaving opened both doors 5 and 7 (figure 2).

During its operation the filter module 100 is connected to a line wherein the fluid to be filtered flows, with the inlet mouth 6 directed upwards and the outflow door 7 directed downwards, in order to use the gravity force to obtain a more efficient operation of the filter module. The axis of the filter module, usually inclined with respect to the vertical, forms an obtuse angle with the common axis of the inlet tract 22 and of the outlet tract 23, in order to reduce the load losses. Of course, it is possible that the inlet tracts 22 and the outlet tracts 23 are arranged onto different axes and that they form any angle with the axis of the filter module. For filter modules manufactured with plastic material, an angle of 90° between inlet tracts 22 or outlet tracts 23 and axis of the filter module is particularly common.

During the fluxing phase (figure 2) the mobile element 15 is in an intermediate position with respect to the stroke thereof, thus leaving opened both the access door 5 and the outflow door 9. The fluid to be filtered enters the feeding chamber 8 through the opening 6, it passes through the access door 5 and enters the pre-filtering chamber 4. The ogive shape of the mobile element 15 reduces the passage section and it accelerates the fluid which, flowing between the active surface of the accelerator 11 and the filter element 3, is partially filtered by passing through the filter element 3, it goes back against gravity upwards to go out from the outlet opening 19 and be introduced, once depurated, into the outlet tract 23. The fluid portion which, flowing between the active surface of the accelerator 11 and the filter element 3, does not pass through the filter element 3, is not filtered and flows downwards, through the outflow door 7, out of the filter module 100. Usually, it is provided that the plant recovers this not filtered fluid and introduces it again into the filter module 100, through the inlet opening 6, for an additional passage. After several passages, dirt concentrates ever more in the fluid outflowing through the outflow door 7. The filter element 3, for example a filtering net, can get dirty and partially clogged by the dirt existing in the liquid to be filtered. The high speed of the liquid flowing onto the filtering net opposes the dirt deposit onto the filtering net itself, by reducing the possibility of getting dirty. However, when it is necessary to clean the filter element, as it is too clogged, an actuator 21 controls the motion of the mobile element 15 in closing position of the access door 5 (figure 3). The pre-filtering chamber 4 empties quickly, as the fluid contained therein outflows through the outflow door 7 which now results to be completely open. The fluid in the feeding chamber 8, not being able to outflow through the access door 5, increases its own pressure and it passes forcedly through the nozzles 9 which produce quick jets shaped like blade directed towards the filter element 3. Such jets, which have a low incidence angle α with respect to the filter element 3, exert a mechanical action useful to remove dirt from the filter element. The fluid used to clean the filter element, together with the removed dirt, then goes out through the outlet door 7. The fluid flow passing through the nozzles 9 is less than that passing through the pre-filtering chamber 4 when the access door is open, the pre-filtering door 4 then results to be almost empty in this washing phase. Once ended the washing of the filter element 3, the mobile element 15 returns into an intermediate position (figure 2) and it starts again to operate normally.

In case of little dirty fluids or low-flow fluids or fluids with rough filtering obtained with a filter net 3 with relatively large meshes, it can be useful to make the filter module 100 to operate in dead end mode or inhibited fluxing mode. To this purpose, the actuator 21 controls the lowering of the mobile element 15 as far as the position wherein it closes completely the outflow door 7 (figure 4). The continuous fluxing of the fluid to be filtered with the recovery of the not filtered fluid is interrupted in this case. The fluid to be filtered, entering the filter module 100 and therefore the pre-filtering chamber 4, can go out therefrom only by passing through the filter element 3. In this operating mode all dirt which cannot pass through the filter element 3 remains onto the bottom of the pre-filtering chamber. This can be accepted in case of particularly reduced fluid flow or in case of not particularly dirty fluid. When the quantity of accumulated dirt becomes excessive, a washing operation is performed by controlling the raising of the mobile element 15, by opening the outflow door 7 and closing completely the access door 5.

In the fluxing operation (figure 2) with the mobile element in intermediate position and both the access door 5 and the outflow door 7 open, the mobile element 15 can be positioned in the centre or in a more advanced position (more proximate to the access door 5) or in a more back position (more proximate to the outflow door 7). Such adjustment can be useful to compensate flow variations of the fluid to be filtered. In fact, if the flow decreases, a more back position allows to fill better the pre-filtering chamber 4 and to filter a larger quantity of fluid. If the flow increases, a more advanced position of the mobile element 15 allows to optimize the flow inside the pre-filtering chamber. The fluxing operation is preferred with respect to the dead end operation when the fluid to be filtered is particularly dirty.

Since the fluid at fist descends downwards and then, once filtered, it must go up to pass through the outlet opening 19, the acceleration received from the fluid in the motion inversion favours a deposition of the heaviest dirt onto the bottom of the pre-filtering chamber 4.

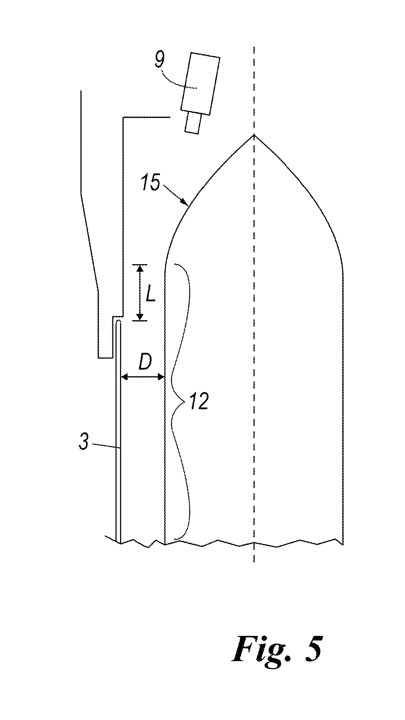

Figure 5 shows a detail of a different embodiment wherein, in the average direction of the flow, the filter element 3 has a back position with respect to the active surface 12 by a quantity L at least equal to the distance D between the filter element 3 and the active surface 12. This is done in order make the filter element 3 to be skimmed over by the fluid moving on the average in the direction parallel to the surface of the filter element 3. In this way the fluid entering the pre-filtering chamber 4 does not impact violently onto the surface of the filter element 3, thus decreasing the possibility of tearing the filter element 3 or damaging it.

In a not represented different embodiment, it is possible that the nozzles 9, instead of being arranged in the separation wall between the feeding chamber 8 and the pre-filtering chamber 4, around the access door 5, are arranged onto the first shutter 10 and therefore start operating when the first shutter 10 closes completely the access door 5.

It is also possible that the filter module does not include the accelerator 11, central body of the mobile element 15, but only a first mobile shutter 10. Such filter module would have a reduced functionality with respect to the preferred embodiment, but it would allow however to implement an automatic washing without the need of having compulsorily a valve onto the line upstream the filter module.

Thanks to the fact that the filter module 100 includes a central mobile element 15 acting both as shutter for the access door or for the outlet door and as accelerator, the filter module can regenerate without the intervention of an operator opening the filter module and cleaning the filter element thereof. Moreover, the presence of an accelerator reduces the possibility of getting dirty and the frequency of the washing operation. The possible axial motion of the mobile element 15 allows to adjust optimally the filter module depending upon the available flow.

## Claims

1. A filter module (100) for fluids comprising a pre-filtering chamber (4) apt to receive the fluid to be filtered, a filter element (3) at least partly limiting said pre-filtering chamber (4), **characterized in that** it comprises a feeding chamber (8) arranged upstream the pre-filtering chamber (4), an access door (5) connecting the feeding chamber (8) to the pre-filtering chamber (4), at least a nozzle (9) apt to connect the feeding chamber (8) to the pre-filtering chamber (4) and a first mobile shutter (10) apt to close the access door (5), said at least a nozzle (9) being crossed by the fluid when the shutter (10) closes the access door (5).

2. The filter module (100) according to claim 1, **characterized in that** said nozzle (9) is arranged between the pre-filtering chamber (4) and the feeding chamber (8).

3. The filter module (100) according to claim 1, **characterized in that** it comprises an outer housing (1) having an inlet opening (6) for inletting the fluid to be filtered and it comprises a flow accelerator (11) having an active surface (12) arranged so as to make the passage section of the fluid between filter element (3) and active surface (12) of the accelerator (11) lower than the passage section of the inlet opening (6).

4. The filter module (100) according to claim 1, **characterized in that** the pre-filtering chamber (4) has an outlet door (7) for outletting the not filtered flow and **in that** the filter module (100) comprises a second mobile shutter (13) apt to close said outlet door (7).

5. The filter module (100) according to one or more of the preceding claims, **characterized in that** said first shutter (10), said accelerator (11) and said second shutter (13) are integral and form a single mobile element (15).

6. The filter module (100) according to the preceding claim, **characterized in that** said first shutter (10) has a substantially conical shape joining the active surface (12) of the accelerator (11).

7. The filter module (100) according to the preceding claim, **characterized in that** the pre-filtering chamber (4) has a substantially cylindrical shape with an upstream base (17) and a downstream base (18), the filter element (3) being arranged at the side surface, the access door (5) being arranged in a central position onto the upstream base (17) and the outflow door (7) being arranged in central position onto the downstream base (18).

8. The filter module (100) according to one or more of the preceding claims, **characterized in that** the pre-filtering chamber (4) has a substantially axialsymmetrical shape and that the mobile element (15) too has a substantially axialsymmetrical shape, with the axis substantially coincident with that of the pre-filtering chamber (4) and it is mobile in the axial direction.

9. The filter module (100) according to one or more of the preceding claims, **characterized in that** said active surface (12) of the accelerator (11) has a cylindrical shape.

10. The filter module (100) according to claim 3, **characterized in that** said outer housing has an outlet opening (19) arranged proximate to the inlet opening (6).

11. The filter module (100) according to one or more of the preceding claims, **characterized in that** in the flow average direction the filter element (3) has a back position with respect to the active surface (12) by an amount (L) at least equal to the distance (D) between the filter element (3) and the active surface (12).

12. The filter module (100) according to one or more of the preceding claims, **characterized in that** it comprises a plurality of nozzles arranged around the inlet opening (6).

13. The filter module (100) according to claim 1, **characterized in that** said at least one nozzle (9) is arranged onto the first shutter (10).
